# EUROPEAN PATENT SPECIFICATION

(11) **EP 2 767 464 B1**
(45) Date of publication and mention of the grant of the patent: **06.11.2019**
(21) Application number: 12837829.6
(22) Date of filing: 10.09.2012
(51) Int. Cl.: B62K 5/02, B60L 15/20, B62J 99/00, B62M 7/12, B62D 9/02

(54) **ELECTRIC VEHICLE**
ELEKTROFAHRZEUG
VÉHICULE ÉLECTRIQUE

(30) Priority: 06.10.2011 JP 2011222267
(43) Date of publication of application: 20.08.2014
(73) Proprietor: Yamaha Hatsudoki Kabushiki Kaisha, Iwata-shi, Shizuoka 438-8501 (JP)
(72) Inventor: HARA, Nobuo, Iwata-shi Shizuoka 438-8501 (JP); SHIBUYA, Yuu, Iwata-shi Shizuoka 438-8501 (JP)
(74) Representative: Grünecker Patent- und Rechtsanwälte PartG mbB
(86) International application number: PCT/JP2012/005715
(87) International publication number: WO 2013/051195

(56) References cited:
- WO-A1-2010/092846
- WO-A2-2008/109103
- DE-A1-102008 033 995
- DE-A1-102009 020 056
- FR-A1- 2 957 049
- JP-A- H03 189 284
- JP-A- 2011 020 558
- JP-A- 2011 045 184
- JP-A- 2011 046 273
- JP-U- 3 161 882
- US-A- 6 015 022

## Description

### Technical Field

This invention relates to an electric vehicle having a pair of right and left drive wheels, and capable of making a turn while leaning a vehicle body.

### Background Art

Conventionally, this type of vehicle includes an electric vehicle having a non-drive wheel and a pair of right and left drive wheels, and capable of making turns while leaning a vehicle body (see Patent Document 1, for example).

### Technique in Patent Document 1

The vehicle in Patent Document 1 includes a non-drive wheel, a steering device, a pair of right and left drive wheels, electric motors for applying driving forces to the respective drive wheels, a link mechanism capable of leaning the vehicle body, and a leaning actuator device for operating this link mechanism.

This vehicle calculates an appropriate lean angle of the vehicle based on a signal from the steering device, and drives the actuator device to attain the calculated lean angle. This operates the link mechanism to lean the vehicle body, thereby to improve turning performance.

### [Prior Art Document]

### [Patent Document]

[Patent Document 1]
Unexamined Patent Publication No. 2011-46273
Further prior art is known from documents WO 2010/092846 A1 and DE 10 2008 033995 A1.

WO 2010/092846 A1 shows the preamble of claim 1.

### Summary of Invention

### Technical Problem

However, the conventional example with such a construction has the following problem.

The vehicle described in Patent Document 1 has the actuator device dedicated to leaning of the vehicle body at the time of making a turn, which brings about inconveniences that the vehicle becomes large and heavy, and the construction of the vehicle becomes complicated.

This invention has been made having regard to the state of the art noted above, and its object is to provide an electric vehicle with a simplified construction and yet capable of changing a position of a vehicle body when the vehicle stands still.

### Solution to Problem

To fulfill the above object, this invention provides an electric vehicle according to claim 1.

### [Functions and Effects]

The electric vehicle according to this invention includes the support mechanism which enables the pair of right and left drive wheels to move up and down. Therefore, a turn can be made while leaning the vehicle body. The pair of motors provided can drive and rotate the respective drive wheels individually. Further, the controller rotates at least one of the drive wheels when the vehicle stands still. By rotation of the drive wheel, the position of the drive wheel contacting a traveling surface changes. With this, the drive wheel moves vertically relative to the vehicle body, the support mechanism rocks relative to the vehicle body, the position of the vehicle body relative to the traveling surface changes, and the position of the vehicle body relative to a direction of gravitational force also changes. Thus, according to this invention, the position of the vehicle body can be changed by a simplified construction when the vehicle stands still.

In the invention described above, the controller adjusts a position of the vehicle body by rotating at least one of the drive wheels. This can stabilize the position of the vehicle body when the vehicle stands still, for example.

The "position of the vehicle body" has a meaning that includes a lean angle of the vehicle body to the direction of gravitational force, a lean angle of the vehicle body to the traveling surface, and the like.

In the invention described above, it is preferred that the controller makes adjustment to reduce a lean angle of the vehicle body to a direction of gravitational force. This can conveniently stabilize the vehicle body when the vehicle stands still.

In the invention described above, it is preferred that the controller rotates reversely one of the drive wheels present in a direction in which the vehicle body leans relative to a direction of gravitational force. Since this can reduce the lean angle of the vehicle body, the vehicle body can be stabilized conveniently when the vehicle stands still.

The "drive wheel present in a direction in which the vehicle body leans relative to a direction of gravitational force" means the right drive wheel when the vehicle body leans to the right with respect to the direction of gravitational force, and means the left drive wheel when the vehicle body leans to the left with respect to the direction of gravitational force. To "rotate reversely" means to rotate in a direction opposite to the rotating direction of the drive wheel corresponding to the direction of forward movement of the electric vehicle.

In the invention described above, it is preferred that the controller rotates forward one of the drive wheels present opposite in a direction in which the vehicle body leans relative to a direction of gravitational force. Since this can reduce the lean angle of the vehicle body, the vehicle body can be stabilized conveniently when the vehicle stands still.

To "rotate forward" means to rotate in the rotating direction of the drive wheel corresponding to the direction of forward movement of the electric vehicle.

In the invention described above, it is preferred that the controller rotates reversely one of the drive wheels present in a direction in which the vehicle body leans relative to a direction of gravitational force, and rotates the other drive wheel forward. Since this can effectively reduce the lean angle of the vehicle body, the vehicle body can be stabilized conveniently when the vehicle stands still.

In the invention described above, it is preferred to comprise a lean angle acquiring unit for acquiring a lean angle of the vehicle body to a direction of gravitational force; wherein the controller controls the motors based on a result of the lean angle acquiring unit. With the lean angle acquiring unit, the lean angle of the vehicle body to the direction of gravitational force can be adjusted appropriately.

In the invention described above, it is preferred to comprise a rocking angle acquiring unit for acquiring a rocking angle of the support mechanism; wherein the controller controls the motors based on each result of the lean angle acquiring unit and the rocking angle acquiring unit. With the result of the rocking angle acquiring unit, the lean angle of the vehicle body to the traveling surface can be determined accurately. Therefore, regardless of conditions of the traveling surface such as a slope, a level difference and so on, the lean angle of the vehicle body to the direction of gravitational force can be adjusted appropriately.

In the invention described above, it is preferred that the controller calculates a target amount of rotation of each drive wheel based on each result of the lean angle acquiring unit and the rocking angle acquiring unit, and controls the motors so that an amount of rotation of each drive wheel become the target amount of rotation. Since this rotates each drive wheel just by the target amount of rotation, the position of the vehicle body can be adjusted accurately and efficiently.

In the invention described above, it is preferred to comprise a rocking angle acquiring unit for acquiring a rocking angle of the support mechanism; wherein the controller controls the motors based on a result of the rocking angle acquiring unit. This can conveniently adjust the lean angle of the vehicle body to the traveling surface.

In the invention described above, the support mechanism includes a right support mechanism rockably supported by the vehicle body for supporting the right drive wheel to be vertically movable, and a left support mechanism rockably supported by the vehicle body for supporting the left drive wheel to be vertically movable; and the rocking angle acquiring unit acquires each rocking angle of the right support mechanism and the left support mechanism. This can accurately determine the lean angle of the vehicle body to the traveling surface.

In the invention described above, it is preferred to comprise an accelerator control amount acquiring unit for acquiring an accelerator control amount; wherein the controller, based on a result of the accelerator control amount acquiring unit, determines that the vehicle stands still when the accelerator control amount is at most a predetermined amount. This can appropriately determine when the vehicle body stands still.

In the invention described above, it is preferred to comprise a non-drive wheel speed acquiring unit for acquiring a wheel speed of the non-drive wheel; wherein the controller, based on a result of the non-drive wheel speed acquiring unit, determines that the vehicle stands still when the wheel speed of the non-drive wheel is zero. This can appropriately determine when the vehicle body stands still.

In the invention described above, it is preferred to comprise a brake operation acquiring unit for acquiring a brake operation on the drive wheels; wherein the controller makes no adjustment of a position of the vehicle body when, based on a result of the brake operation acquiring unit, the controller determines that a brake operation has been carried out. This can avoid driving and rotating the drive wheels being braked.

In the invention described above, it is preferred that the support mechanism includes a seesaw member for vertically moving the pair of drive wheels in opposite directions to each other. When one of the drive wheels moves vertically relative to the vehicle body, the other drive wheel moves vertically in the opposite direction relative to the vehicle body. Thus, the position of the vehicle body can be changed effectively.

### Advantageous Effects of Invention

The electric vehicle according to this invention can travel by the motors individually provided for the respective drive wheels, and the position of the vehicle body can be changed conveniently by rotating one of these drive wheels when the vehicle stands still.

### Brief Description of Drawings

Figure 1 is a left side view of an electric vehicle according to Embodiment 1;
Figure 2 is a left side view showing a principal portion of the electric vehicle according to Embodiment 1;
Figure 3 is a rear view of the electric vehicle according to Embodiment 1;
Figure 4 is a section taken on line a-a of Figure 2, in which Figure 4A shows a seesaw member in neutral position, and Figure 4B shows the seesaw member not in neutral position;
Figure 5 is a perspective view of the principal portion of the electric vehicle seen from a rear left side;
Figure 6 is a perspective view of the principal portion of the electric vehicle seen from the rear left side;
Figure 7 is a rear view of the electric vehicle with a vehicle body leaning to the right;
Figure 8 is a block diagram showing an outline construction of a control system of the electric vehicle according to Embodiment 1;
Figure 9 is a view schematically showing a positional relation between rocking of rear arms and rear wheels contacting a traveling surface;
Figure 10 is a rear view of the electric vehicle with a relationship between rotation of each rear wheel and position of the vehicle body, in which Figure 10A shows the vehicle body leaning to the right relative to the traveling surface, Figure 10B shows the vehicle body standing upright relative to the traveling surface, and Figure 10C shows the vehicle body leaning to the left relative to the traveling surface;
Figure 11 is a left side view of an electric vehicle according to Embodiment 2;
Figure 12 is a rear view of the electric vehicle according to Embodiment 2;
Figure 13 is a block diagram showing an outline construction of a control system of the electric vehicle according to Embodiment 2;
Figure 14 is a flow chart showing an operating sequence of vehicle body position control; and
Figure 15 is a view showing vehicle body position control of the electric vehicle on a non-horizontal traveling surface G, in which Figure 15A shows a vehicle body leaning to the right relative to a direction of gravitational force, Figure 15B shows the vehicle body leaning to the left relative to the direction of gravitational force, and Figure 15C shows the vehicle body having zero lean angle to the direction of gravitational force.

### Embodiment 1

An electric vehicle of this invention will be described hereinafter with reference to the drawings.

### 1. Outline construction of electric vehicle

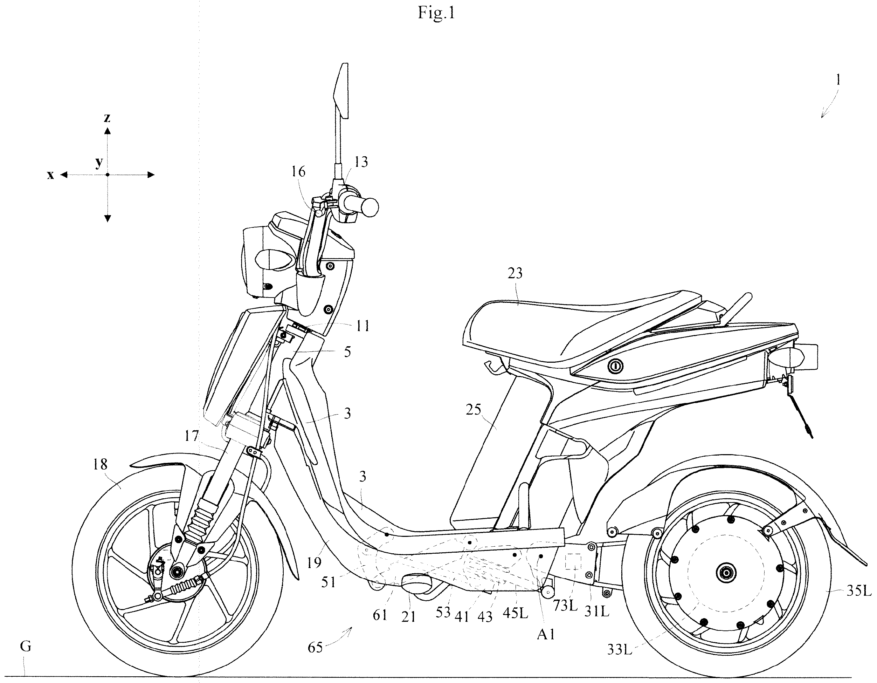

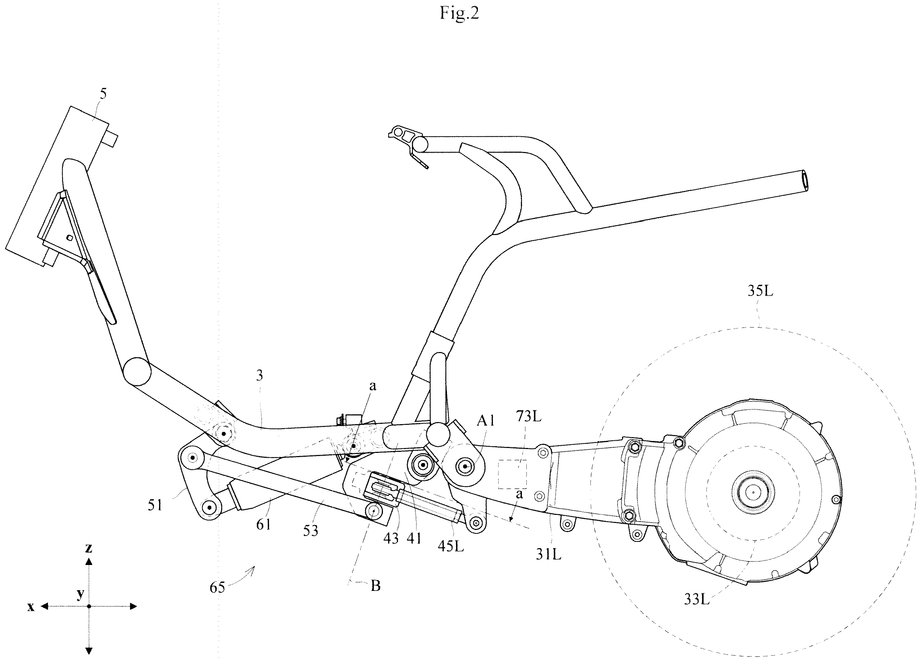

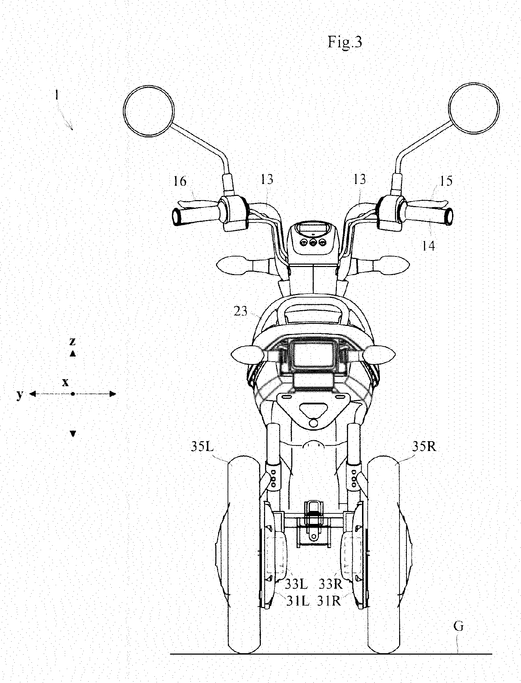

Fig. 1 is a left side view of an electric vehicle according to Embodiment 1. Fig. 2 is a left side view showing a principal portion of the electric vehicle according to Embodiment 1. Fig. 3 is a rear view of the electric vehicle according to Embodiment 1.

In each figure, x-direction is the longitudinal direction of a vehicle body, y-direction the transverse direction of the vehicle body, and z-direction the up-and-down direction of the vehicle body. The longitudinal direction x, transverse direction y and up-and-down direction z of the vehicle body are at right angles to one another. When the vehicle body stands upright on a horizontal traveling surface G, the longitudinal direction x and transverse direction y of the vehicle body are horizontal, respectively, and the up-and-down direction z of the vehicle body is vertical. In Fig. 1, the left side of the drawing is the front of the electric vehicle 1, and the right side of the drawing is the rear of the electric vehicle 1. A simple indication herein of right and left refers to "right" and "left" as seen from the rider on the electric vehicle 1.

Reference is made to Figs. 1 and 2. The electric vehicle 1 in this embodiment is a scooter type three-wheeled vehicle. The electric vehicle 1 has a body frame 3. A head tube 5 is disposed at the front end of the body frame 3. The head tube 5 has a steering shaft 11 rotatably inserted therein.

A handlebar 13 is attached to an upper end of the steering shaft 11. As shown in Fig. 3, the handlebar 13 has an accelerator grip 14, a front brake lever 15 and a rear brake lever 16 attached thereto to be operated by the rider.

Reference is made to Fig. 1. A front fork 17 is attached to a lower end of the steering shaft 11. A single front wheel 18 is rotatably supported by the lower end of the front fork 17. The front wheel 18 is rotatable with steering operation. The front wheel 18 corresponds to the non-drive wheel in this invention.

A front cover 19 is attached to the body frame 3. In this specification, the term "vehicle body" is used as appropriate to indicate the body frame 3 including also the front cover 19 and other components integrally fixed to the body frame 3.

The body frame 3 has, attached thereto, a pair of right and left pedals 21 for supporting the rider's feet, and a seat 23 for the rider to sit on. Below the seat 23, the body frame 3 supports a battery 25 which can accumulate electric power.

### 2. Construction relating to rear arms, motors and rear wheels

Reference is made to Figs. 1 to 3. The body frame 3 supports a right rear arm 31R (see Fig. 3) and a left rear arm 31L. The right rear arm 31R and left rear arm 31L are rockable about a rocking central axis A1. The rocking central axis A1 is parallel to the transverse direction y. In this specification, an angle through which the right rear arm 31R rocks about the rocking central axis A1 relative to the vehicle body is called "right rocking angle". Similarly, an angle through which the left rear arm 31L rocks about the rocking central axis A1 relative to the vehicle body is called "left rocking angle". An arbitrary position can be selected as reference for these right rocking angle and left rocking angle. For example, the position of each rear arm 31R or 31L relative to the vehicle body standing upright may be selected as reference (zero degree). In the following description, the simple term "rocking angle" is used when the right rocking angle and the left rocking angle are not distinguished.

Each of the right rear arm 31R and left rear arm 31L is disposed to extend rearward from the rocking central axis A1. As shown in Fig. 3, a right electric motor 33R is mounted in a rear end portion of the right rear arm 31R. The right electric motor 33R is electrically connected to the battery 25 to receive supply of electric power from the battery 25. The right electric motor 33R is connected to a right rear wheel 35R.

The right electric motor 33R can drive the right rear wheel 35R for forward rotation and reverse rotation. The forward rotation is rotation in a direction corresponding to the forward moving direction of the electric vehicle 1. The reverse rotation is rotation in the direction reverse to the direction corresponding to the forward moving direction of the electric vehicle 1. Similarly, as shown in Figs. 1 to 3, a left electric motor 33L is mounted in a rear end portion of the left rear arm 31L. The left electric motor 33L is connected to a left rear wheel 35L to be able to rotate the left rear wheel 35L.

As shown in Fig. 3, the right rear wheel 35R and left rear wheel 35L are arranged at the right side and the left side of the vehicle body, respectively, with the vehicle body located in between. When the right rear arm 31R rocks about the rocking central axis A1, the right rear wheel 35R will move substantially in the up-and-down direction z relative to the vehicle body. That is, the right rear arm 31R supports the right rear wheel 35R to be movable up and down. Similarly, the left rear arm 31L supports the left rear wheel 35L to be movable up and down.

When each electric motor 33R or 33L rotates individually each rear wheel 35R or 35L forward, the electric vehicle 1 will travel. The right rear wheel 35R and left rear wheel 35L correspond to the drive wheels in this invention. The right electric motor 33R and left electric motor 33L correspond to the motors in this invention.

### 3. Construction relating to lever and seesaw member

As shown in Figs. 1 and 2, the body frame 3 supports a lever 41 to be rockable about an axis parallel to the transverse direction y. The lever 41 supports a seesaw member 43. With rocking of the lever 41, the seesaw member 43 moves substantially in the longitudinal direction x. The seesaw member 43 is rotatable about an axis of rotation B relative to the lever 41. The axis of rotation B passes through the center of the seesaw member 43 and extends substantially perpendicular to the transverse direction y.

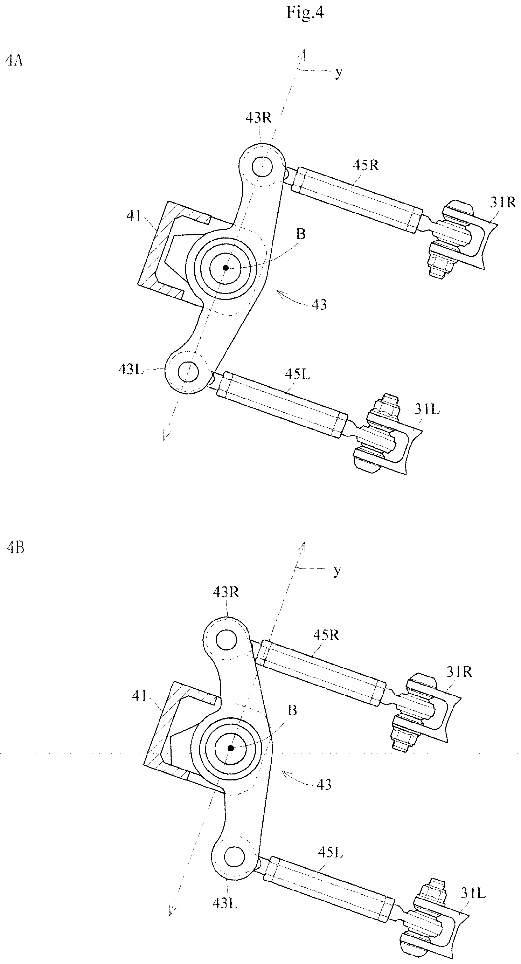

Reference is made to Fig. 4. Fig. 4 is a section taken on line a-a of Fig. 2, in which Fig. 4A shows the seesaw member 43 in neutral position, and Fig. 4B shows the seesaw member 43 not in neutral position.

As shown in Fig. 4, the seesaw member 43 assumes a shape extending to opposite sides in the transverse direction y from the axis of rotation B. The seesaw member 43 has a right end 43R and a left end 43L thereof interlocked by two rods 45R and 45L to the right rear arm 31R and left rear arm 31L, respectively.

As shown in Fig. 4A, when the seesaw member 43 is in neutral position, the right rocking angle of the right rear arm 31R and the left rocking angle of the left rear arm 31L are the same.

As shown in Fig. 4B, when the seesaw member 43 rotates about the axis B, the rod 45R will move substantially forward and the rod 45L backward. The right rear arm 31R will rock downward and the left rear arm 31L upward.

Thus, the seesaw member 43 rocks the right rear arm 31R and left rear arm 31L in directions opposite to each other.

Motions including the respective rear wheels 35R and 35L and the vehicle body will be described again now.

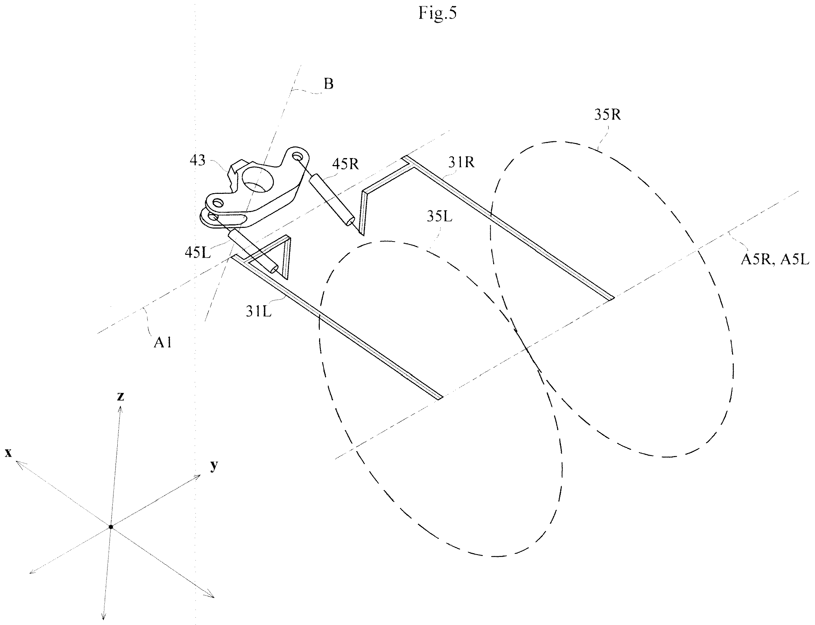

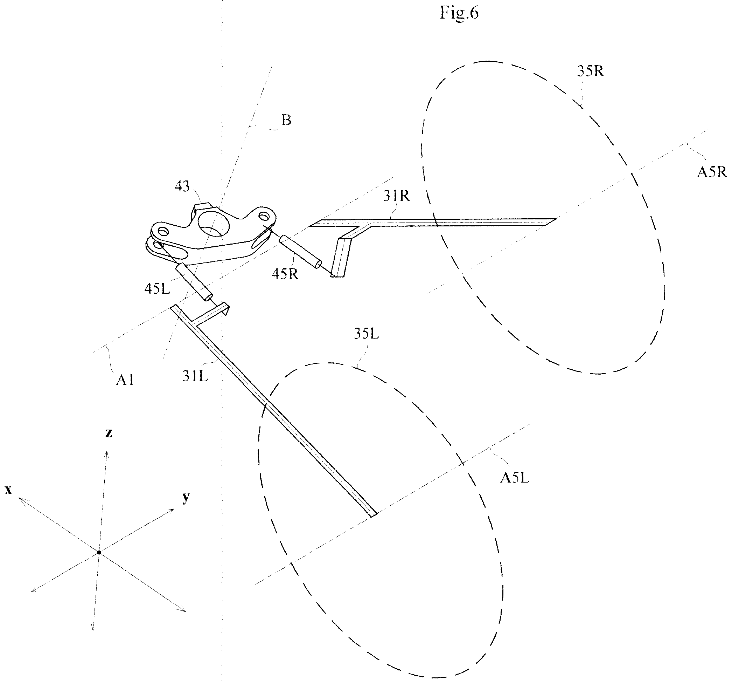

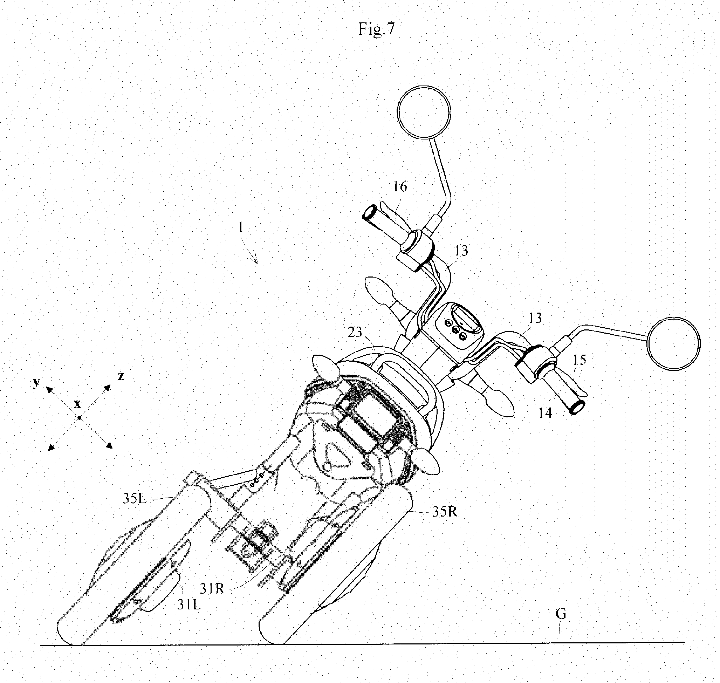

Reference is made to Figs. 5 to 7. Figs. 5 and 6 are perspective views of the principal portion seen from a rear left side of the electric vehicle, respectively. Fig. 5 shows a state in which the vehicle body stands upright, and Fig. 6 shows a state in which the vehicle body leans to the right. Figs. 5 and 6 schematically show the right and left rear arms 31 R and 31L and the rods 45R and 45L. Fig. 7 is a rear view of the electric vehicle corresponding to Fig. 6 and shows the vehicle body leaning to the right. Fig. 3 is a rear view of the electric vehicle corresponding to Fig. 5.

When, for example, the vehicle body stands upright on the traveling surface G as shown in Figs. 3 and 5, the rear wheels 35R and 35L are in the same height position relative to the vehicle body. In this case, the seesaw member 43 is in neutral position. Fig. 5 shows an axle A5R of the right rear wheel 35R and an axle A5L of the left rear wheel 35L (and so does Fig. 6).

Now, when the vehicle body leans to the right relative to the traveling surface G, as shown in Figs. 6 and 7, the right wheel 35R will move upward relative to the vehicle body. The right rear arm 31R rocks upward about the rocking central axis A1. The rod 45R moves substantially backward, the seesaw member 43 rotates about the axis of rotation B, and the rod 45L moves forward. The left rear arm 31L rocks downward, and the left rear wheel 35L moves substantially downward relative to the vehicle body. The amount of downward movement of the left rear wheel 35L is substantially equivalent to the amount of upward movement of the right rear wheel 35R.

Thus, each rear arm 31R or 31L rocks with variations in the position of the vehicle body, and each rear wheel 35R or 35L moves up and down. The seesaw member 43 is interlocked to the right rear arm 31R and left rear arm 31L to move the right rear wheel 35R and left rear wheel 35L up and down in directions opposite to each other.

### 4. Construction relating to bracket and buffer

Reference is made to Fig. 2. A bracket 51 is rockably supported by the body frame 3. The bracket 51 is interlocked to the lever 41 by a rod 53. When the bracket 51 rocks, the lever 41 will rock therewith.

A buffer 61 has a rear end thereof interlocked to the body frame 3. The front end of the buffer 61 is supported by the bracket 51. When the bracket 51 rocks, the buffer 61 will extend and contract.

When the right or left rear arm 31R or 31L receives a shock, the seesaw member 43 will move, the lever 41 and bracket 51 will rock, respectively, and the buffer 61 will expand and contract. Thus, with the respective members interlocked, the buffer 61 can be contracted to absorb a shock conveniently.

The right rear arm 31R, left rear arm 31L, lever 41, seesaw member 43, rods 45R and 45L, bracket 51, rod 53 and buffer 61 described above constitute a support mechanism 65. The right rear arm 31R corresponds to the right support mechanism in this invention. The left rear arm 31L corresponds to the left support mechanism in this invention.

### 5. Controller

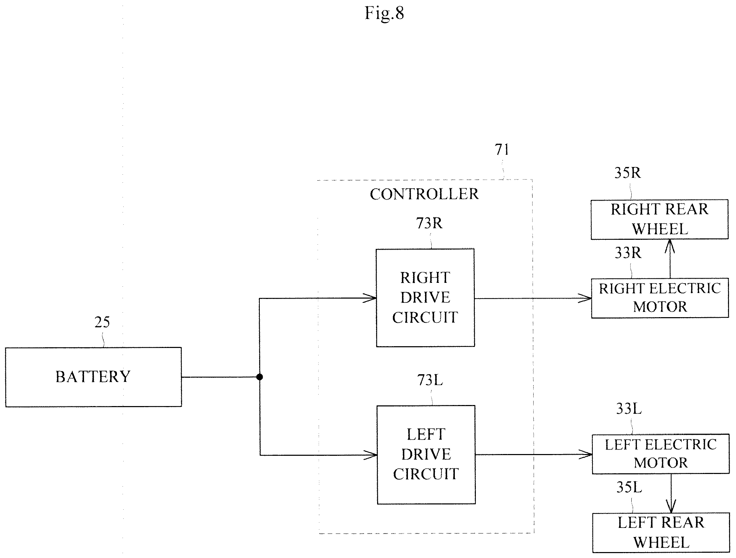

Reference is made to Fig. 8. Fig. 8 is a block diagram showing an outline construction of a control system. A controller 71 includes a right drive circuit 73R and a left drive circuit 73L.

The right drive circuit 73R is electrically connected between the battery 25 and the right electric motor 33R for carrying out drive control of the right electric motor 33R. The left drive circuit 73L is electrically connected between the battery 25 and the left electric motor 33L for carrying out drive control of the left electric motor 33L.

As shown in Fig. 2, the left drive circuit 73L is mounted in the left rear arm 31L. The right drive circuit 73R is likewise mounted in the right rear arm 31R. The controller 71 is realized by a central processing unit (CPU) which performs various processes, a storage medium, a microcomputer, an inverter and so on.

### 6. Examples of operation

Next, examples of operation of the electric vehicle 1 according to Embodiment 1 will be described. Here description will be made on operations to change positions of the vehicle body when the electric vehicle 1 stands still.

### 6.1. Operation to reduce lean angle of the vehicle body to traveling surface G

Assume that, as shown in Fig. 7, the electric vehicle 1 stands still with the vehicle body leaning rightward relative to a traveling surface G. At this time, the right drive circuit 73R drives the right rear wheel 35R to rotate slightly reversely, and the left drive circuit 73L drives the left rear wheel 35L to rotate slightly forward. This reduces the lean angle of the vehicle body to the traveling surface G to be able to change to the position of the vehicle body as shown in Fig. 2.

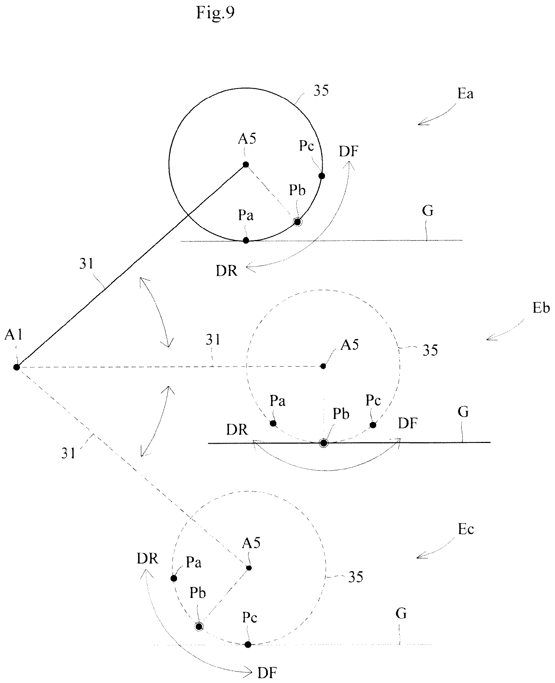

This operation will be described in detail with reference to Fig. 9. Fig. 9 is a view schematically showing a positional relation between rocking of the rear arms 31 and the rear wheels 35 contacting the traveling surface G. Fig. 9 is a view of one of the rear arms 31 and the rear wheel 35 supported by this rear arm 31 seen from the direction of the rocking central axis A1, which shows three states Ea, Eb and Ec. In the state Ea, the rear wheel 35 is located higher than in the other states Eb and Ec. In the state Ec, the rear wheel 35 is located lower than in the states Ea and Eb.

When the rear arm 31 rocks about the rocking central axis A1 as shown, the rear wheel 35 will move up and down, the position of the rear wheel 35 in contact with the traveling surface G (hereinafter called the "point of contact of the rear wheel 35" as appropriate) will change between points Pa, Pb and Pc. Conversely, when the point of contact of the rear wheel 35 is changed, the rear wheel 35 will move up and down and the rear arm 31 will rock.

The point of contact of the rear wheel 35 can be changed forcibly by rotating the rear wheel 35 forward or reversely. For example, when the rear wheel 35 is rotated reversely in the state Ea, the point of contact of the rear wheel 35 will change from point Pa to point Pb and point Pc, and the rear arm 31 and rear wheel 35 will move from the position in the state Ea to the positions in the states Eb and Ec. When the rear wheel 35 is rotated forward in the state Ec, the point of contact of the rear wheel 35 will change from point Pc to point Pb and point Pa, and the rear arm 31 and rear wheel 35 will move from the position in the state Ec to the positions in the states Eb and Ea. In Fig. 9, direction DF indicates the direction of forward rotation of the rear wheel 35, and direction DR indicates the direction of reverse rotation of the rear wheel 35.

As is clear from the above, when the rear wheel 35 is rotated reversely, the rear arm 31 can be rocked downward, and when the rear wheel 35 is rotated forward, the rear arm 31 can be rocked upward.

Therefore, when the right rear wheel 35R is rotated reversely in the state where the vehicle body is in the position leaning rightward as shown in Fig. 7, the right rear arm 31R is rocked downward relative to the vehicle body. When the left rear wheel 35L is rotated forward, the left rear arm 31L is rocked upward relative to the vehicle body. With the rocking of these right rear arm 31R and left rear arm 31L, the lean angle of the vehicle body to the traveling surface G becomes small. Therefore, a change occurs from the position of the vehicle body shown in Fig. 7 to the position of the vehicle body shown in Fig. 3. The position of the vehicle body changes similarly also when only one of the right rear wheel 35R and left rear wheel 35L is rotated.

Here, the right rear wheel 35R is a drive wheel present in the direction in which the vehicle body is leaning relative to the traveling surface G, and the left rear wheel 35L is a drive wheel present opposite to the direction in which the vehicle body is leaning relative to the traveling surface G. It can therefore be said that, when the rear wheel 35 present in the direction in which the vehicle body is leaning relative to the traveling surface G is rotated reversely, the lean angle of the vehicle body to the traveling surface G can be reduced. It can also be said that, when the rear wheel 35 present opposite to the direction in which the vehicle body is leaning relative to the traveling surface G is rotated forward, the lean angle of the vehicle body to the traveling surface G can be reduced.

Further, where the traveling surface G is horizontal, the direction in which the vehicle body leans relative to the traveling surface G corresponds to a direction in which the vehicle body leans relative the direction of gravitational force. Therefore, where the traveling surface G is horizontal, the above relation exists also between rotation of each rear wheel 35R or 35L and leaning of the vehicle body relative to the direction of gravitational force.

### 6.2. Operation to change lean angle of the vehicle body to traveling surface G

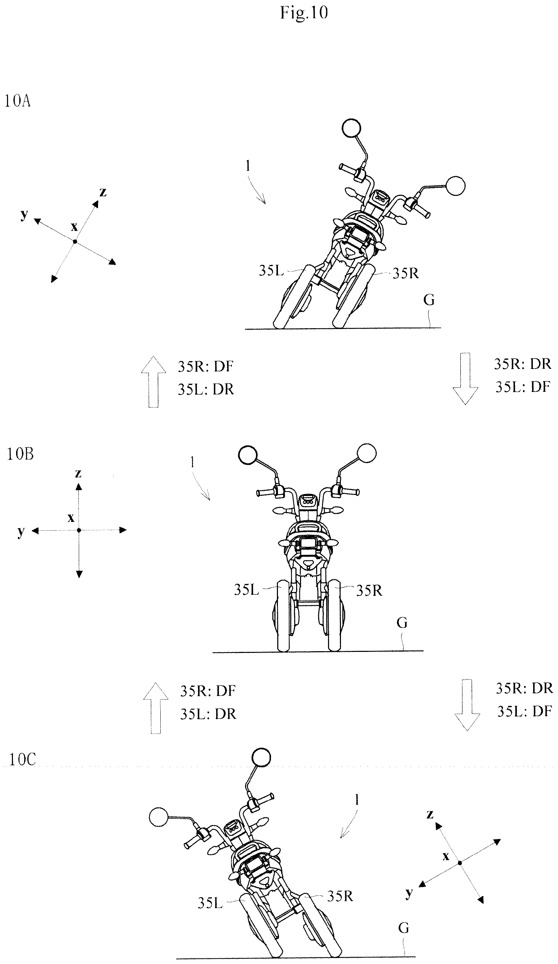

Reference is made to Fig. 10. Fig. 10 is a view showing a relationship between rotation of each rear wheel and position of the vehicle body, in which Fig. 10A shows a rear view of the electric vehicle 1 with the vehicle body leaning to the right relative to the traveling surface G, Fig. 10B shows a rear view of the electric vehicle 1 with the vehicle body standing upright relative to the traveling surface G, and Fig. 10C shows a rear view of the electric vehicle 1 with the vehicle body leaning to the left relative to the traveling surface G. In the following description also, the electric vehicle 1 is assumed to be standing still.

When the right rear wheel 35R is rotated reversely and the left rear wheel 35L is rotated forward in the state where the vehicle body is leaning to the right relative to the traveling surface G as shown in Fig. 10A, the lean angle of the vehicle body to the traveling surface G will be reduced and the vehicle body will stand upright as shown in Fig. 10B. When the right rear wheel 35R is further rotated reversely and the left rear wheel 35L rotated forward, the lean angle of the vehicle body to the traveling surface G will become large and the vehicle body will lean to the left relative to the traveling surface G as shown in Fig. 10C. In this way, by rotating each rear wheel 35R or 35L forward or reversely, the lean angle of the vehicle body to the traveling surface G can be made small or large.

Similarly, when the right rear wheel 35R is rotated forward and the left rear wheel 35L is rotated reversely in the state where the vehicle body is leaning to the left relative to the traveling surface G as shown in Fig. 10C, the lean angle of the vehicle body to the traveling surface G will be reduced and the vehicle body will stand upright as shown in Fig. 10B. When the right rear wheel 35R is further rotated forward and the left rear wheel 35L rotated reversely, the lean angle of the vehicle body to the traveling surface G will become large and the vehicle body will lean to the right relative to the traveling surface G as shown in Fig. 10A. In this way, by rotating each rear wheel 35R or 35L forward or reversely, the lean angle of the vehicle body to the traveling surface G can be made small or large.

As described above, the electric vehicle 1 according to Embodiment 1, when standing still, can conveniently change the position of the vehicle body by rotating the rear wheels 35R and 35L. This can be realized with a simplified construction since the vehicle body can be leaned by the motors provided for the respective rear wheels 35R and 35L.

With the seesaw member 43 provided, rocking of the rear arms 31R and 31L can be interlocked to each other, which can effectively change the position of the vehicle body.

### Embodiment 2

Embodiment 2 of this invention will be described hereinafter with reference to the drawings. An electric vehicle 1 according to Embodiment 2 is different in the constructions of detectors and controller from Embodiment 1, and in the other aspects has substantially the same constructions as Embodiment 1. So, the electric vehicle 1 according to Embodiment 2 will be described centering on the detectors and the controller. Like reference signs are affixed to the same components as in Embodiment 1, and their detailed description will be omitted.

### 1. Detectors

The electric vehicle 1 includes, as the detectors, a front wheel speed acquiring unit 81, an accelerator control amount acquiring unit 83, a rear brake operation acquiring unit 85, a lean angle acquiring unit 87, and a pair of rocking angle acquiring units 89R and 89L.

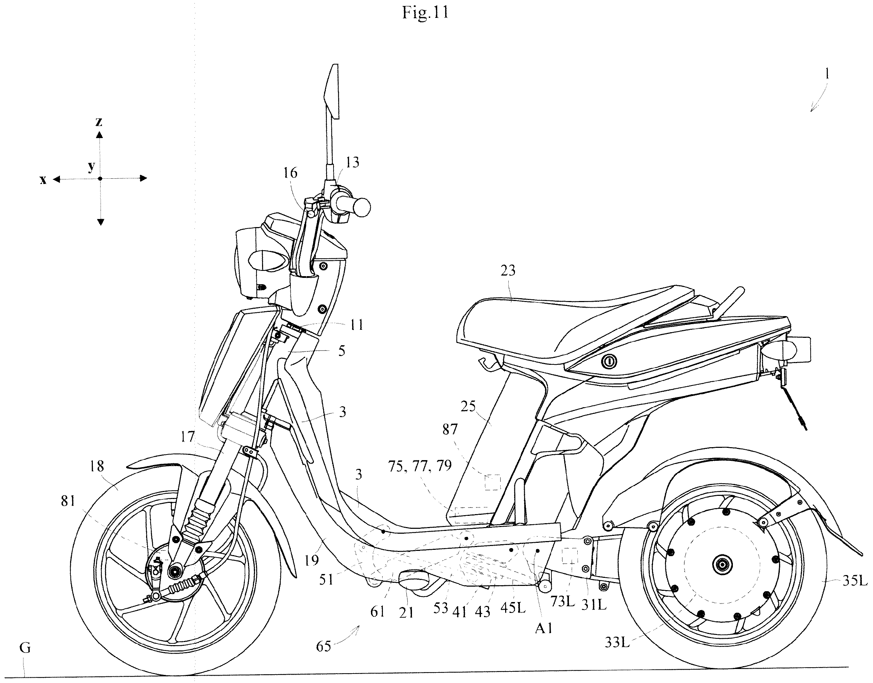

Reference is made to Fig. 11. Fig. 11 is a left side view of the electric vehicle according to Embodiment 2. The front wheel speed acquiring unit 81 is mounted on the front wheel 18 for detecting wheel speeds of the front wheel 18. The front wheel speed acquiring unit 81 is formed of a rotary encoder or the like. The front wheel speed acquiring unit 81 corresponds to the non-drive wheel speed acquiring unit in this invention.

The lean angle acquiring unit 87 is mounted in the vehicle body for detecting lean angles of the vehicle body (strictly speaking, the vertical direction z of the vehicle body) to the direction of gravitational force. The lean angle acquiring unit 87 is formed of an acceleration sensor, a gyroscope sensor or the like.

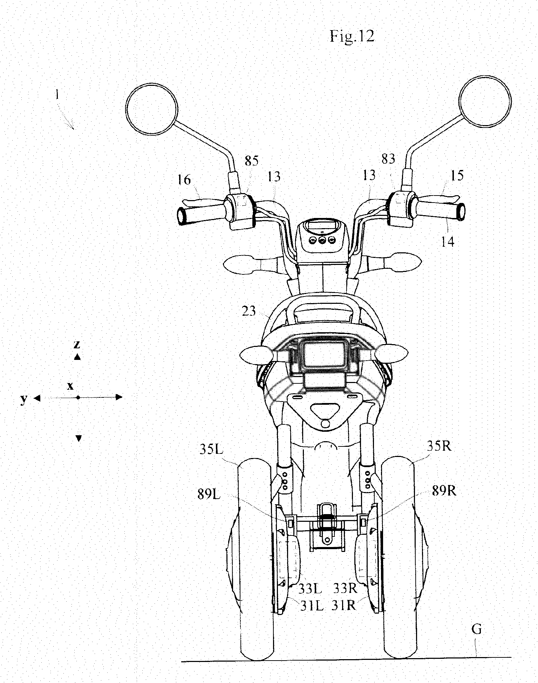

Reference is made to Fig. 12. Fig. 12 is a rear view of the electric vehicle according to Embodiment 2. The accelerator control amount acquiring unit 83 is mounted on the handlebar 13 for detecting control amounts of the accelerator grip 14 by the rider. The accelerator control amount acquiring unit 83 is formed of a magnetic sensor, potentiometer or rotary encoder.

The rear brake operation acquiring unit 85 is mounted on the handlebar 13 for detecting presence or absence of operation of the rear brake lever 16 by the rider.

The right rocking angle acquiring unit 89R is mounted on a connection between the vehicle body and right rear arm 31R for detecting right rocking angles of the right rear arm 31R relative to the vehicle body. The left rocking angle acquiring unit 89L similarly is for detecting left rocking angles of the left rear arm 31L relative to the vehicle body. The respective rocking angle acquiring units 89R and 89L correspond to the rocking angle acquiring units in this invention.

Each of the above acquiring units 81, 83, 85, 87, 89R and 89L outputs detection results to a controller 71 described hereinafter.

### 2. Controller

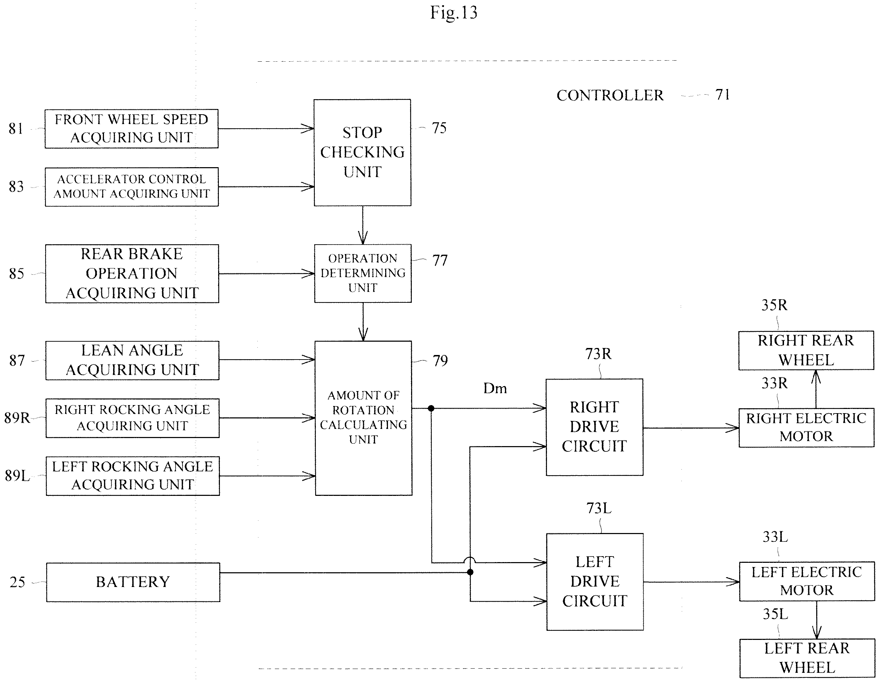

Reference is made to Fig. 13. Fig. 13 is a block diagram showing an outline construction of a control system. The controller 71 includes a stop checking unit 75, an operation determining unit 77, an amount of rotation calculating unit 79, a right drive circuit 73R and a left drive circuit 73L.

The stop checking unit 75 checks whether the electric vehicle 1 is standing still, based on detection results of the front wheel speed acquiring unit 81 and the accelerator control amount acquiring unit 83.

The operation determining unit 77 determines, based on a detection result of the rear brake operation acquiring unit 85, whether the amount of rotation calculating unit 79 should carry out processing. This in substance determines whether to execute a vehicle body lean control or not.

The amount of rotation calculating unit 79 calculates a target amount of rotation of each rear wheel 35R or 35L, based on detection results of the lean angle acquiring unit 87 and each of the rocking angle acquiring units 89R and 89L. Each target amount of rotation includes information on a direction of rotation, i.e. information designating forward rotation or reverse rotation.

As shown in Fig. 11, the stop checking unit 75, operation determining unit 77 and amount of rotation calculating unit 79 described above are disposed in positions adjacent the battery 25. The controller 71 is realized by a central processing unit (CPU) which performs various processes, and a storage medium, or a microcomputer. The storage medium has, stored therein beforehand, information for use in the vehicle body lean control. The information for use in the vehicle body lean control includes, for example, information on a relation between the rocking angle of each rear arm 31R or 31L and the lean angle of the vehicle body to the traveling surface G, and information on a relation between the amount of rotation of each rear wheel 35R or 35L and the amount of change in the rocking angle of each rear arm 31R or 31L.

### 3. Example of operation

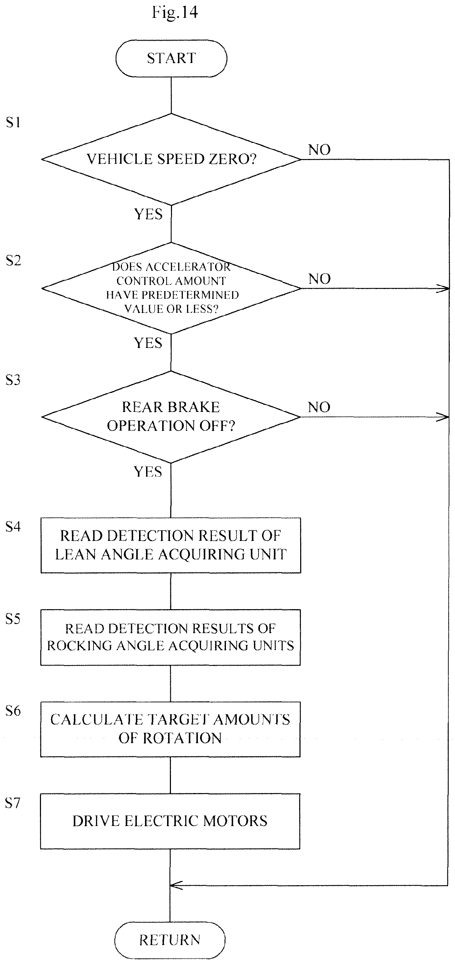

Next, an example of operation of the electric vehicle 1 according to Embodiment 2 will be described. Here an operation to adjust position of the vehicle body when the electric vehicle 1 stands still will be described. Fig. 14 is a flow chart showing an operating sequence.

### <Step S1> Is vehicle speed zero?

The stop checking unit 75 checks whether the wheel speed of the front wheel 18 is zero based on the detection result of the front wheel speed acquiring unit 81. When it is zero, the operation proceeds to step S2. Otherwise the operation makes a return (RETURN).

### <Step S2> Does accelerator control amount have a predetermined value or less?

The stop checking unit 75 checks whether or not the accelerator control amount has a predetermined value or less, based on the detection result of the accelerator control amount acquiring unit 83. Preferably, the predetermined value is set taking play into consideration. The predetermined value may be 5%, for example. When the accelerator control amount has the predetermined value or less, the stop checking unit 75 determines that it is a "stopping time", and the operation proceeds to step S3. Otherwise the operation makes a return.

### <Step S3> Is rear brake operation OFF?

The operation determining unit 77 determines whether the rear brake operation is OFF based on the detection result of the rear brake operation acquiring unit 85. When it is OFF, the operation determining unit 77 determines to execute the vehicle body lean control, and the operation proceeds to step S4. Otherwise the operation makes a return.

### <Step S4> Read detection result of lean angle acquiring unit.

The controller 71 reads the detection result of the lean angle acquiring unit 87. The detection result is inputted to the amount of rotation calculating unit 79.

### <Step S5> Read detection results of rocking angle acquiring units

The controller 71 reads the detection result of each of the rocking angle acquiring units 89R and 89L. Each detection result is inputted to the amount of rotation calculating unit 79.

### <Step S6> Calculate target amount of rotation

The amount of rotation calculating unit 79 calculates a target amount of rotation for each of the rear wheels 35R and 35L based on each inputted detection result. This embodiment illustrates, by way of example, a case where the target amount of rotation is an amount of rotation of each rear wheel 35R or 35L needed to make zero the lean angle of the vehicle body to the direction of gravitational force.

In this case, a leaning amount of the vehicle body needed to make zero the lean angle of the vehicle body to the direction of gravitational force can be determined based on the detection result of the lean angle acquiring unit 87. On the other hand, a lean angle of the vehicle body to the traveling surface G and a positional relationship between the vehicle body and each rear arm 31R or 31L can be determined based on the detection results of the rocking angle acquiring units 89R and 89L. Therefore, a relation between the leaning amount of the vehicle body and the rocking amount of each rear arm 31R or 31L can be obtained with high accuracy. That is, not only where the traveling surface G is horizontal, but where the traveling surface G is sloped or has a level difference, for example, it is possible to determine appropriately how much each rear arm 31R or 31 L should be rocked in order to change the lean angle of the vehicle body by a predetermined amount.

Since the relation between the rocking amount of each rear arm 31R or 31L and the amount of rotation of each rear wheel 35R or 35L is known, it is possible to determine an amount of rotation of each rear wheel 35R or 35L required to rock each rear arm 31R or 31L a predetermined amount. Therefore, the relation between the leaning amount of the vehicle body and the amount of rotation of each rear wheel 35R or 35L can be determined with high accuracy. Therefore, the lean angle acquiring unit 87 can calculate appropriately a target amount of rotation for each rear wheel 35R or 35L based on each detection result.

When the target amount of rotation is an amount of rotation for making zero the lean angle of the vehicle body to the direction of gravitational force, a direction of rotation of each rear wheel 35R or 35L can be determined appropriately. That is, the rear wheel 35 present in the direction in which the vehicle body leans relative to the direction of gravitational force should be rotated reversely, and the other rear wheel 35 rotated forward. And the amount of rotation calculating unit 79 outputs the target amount of rotation of the right rear wheel 35R to the right drive circuit 73R, and outputs the target amount of rotation of the left rear wheel 35L to the left drive circuit 73L.

### <Step S7> Drive electric motors

Each of the drive circuits 73R and 73L, based on the target amount of rotation, rotates each rear wheel 35R or 35L just the target amount of rotation. As a result, the position of the vehicle body changes and the lean angle of the vehicle body relative to the direction of gravitational force becomes zero.

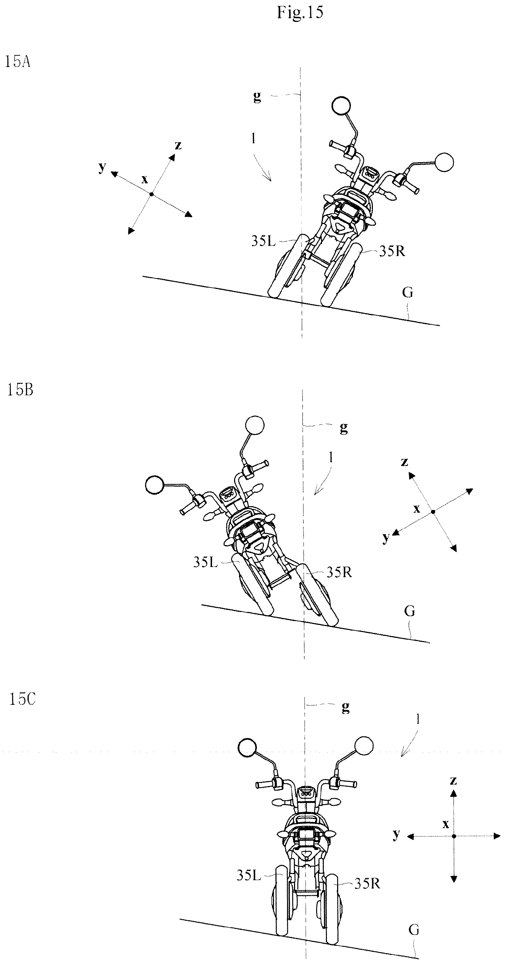

Reference is made to Fig. 15. Fig. 15 is a view showing the vehicle body lean control of the electric vehicle on a non-horizontal traveling surface G. Fig. 15A shows the vehicle body leaning to the right relative to a direction of gravitational force. Fig. 15B shows the vehicle body leaning to the left relative to the direction of gravitational force. Fig. 15C shows the vehicle body having zero lean angle to the direction of gravitational force. In any of the states shown in these figures 15A and 15B, this step S7 can make zero the lean angle of the vehicle body to the direction of gravitational force g as shown in Fig. 15C.

As described above, the electric vehicle 1 according to Embodiment 2 includes the lean angle acquiring unit 87, and the controller 71 performs controls based on the detection results of the lean angle acquiring unit 87. This can conveniently adjust the lean angle of the vehicle body to the direction of gravitational force.

The right rocking angle acquiring unit 89R and the left rotation angle acquiring unit 89L are provided, and the controller 71 performs controls taking into consideration the detection result of each of these rocking angle acquiring units 89R and 89L. Thus, even where the traveling surface G is not horizontal, the lean angle of the vehicle body to the direction of gravitational force can be adjusted conveniently.

Since the controller 71 adjusts the position of the vehicle body so that the lean angle of the vehicle body to the direction of gravitational force become zero, the vehicle body can be stabilized conveniently when the vehicle stands still.

Since the amount of rotation calculating unit 79 is provided for calculating target amounts of rotation, the position of the vehicle body can be adjusted efficiently and accurately.

Since the front wheel speed acquiring unit 81 and the accelerator control amount acquiring unit 83 are provided, the stop checking unit 75 can determine properly whether it is a stopping time.

The rear brake operation acquiring unit 85 is provided, and the operation determining unit 77 determines to execute the vehicle body lean control only when a rear brake operation is OFF. This can avoid driving and rotating the rear wheels 35 while they are braked.

This invention is not limited to the foregoing embodiments, but may be modified as follows:
(1) In Embodiment 2 described above, the controller 71 includes the amount of rotation calculating unit 79 for calculating target amounts of rotation, but this is not limitative. For example, a modification may be made such that, while monitoring the detection result of the lean angle acquiring unit 87, each of the electric motors 33R and 33L is controlled to make the lean angle of the vehicle body to the direction of gravitational force approach zero (to reduce the lean angle of the vehicle body to the direction of gravitational force). At this time, only the rear wheel 35 present in the direction in which the vehicle body leans relative to the direction of gravitational force may be rotated reversely, or only the rear wheel 35 present opposite to the direction in which the vehicle body leans relative to the direction of gravitational force may be rotated forward. Or the rear wheel 35 present in the direction in which the vehicle body leans relative to the direction of gravitational force may be rotated reversely, and the other rear wheel 35 may be rotated forward. In either case, the lean angle of the vehicle body to the direction of gravitational force can be reduced conveniently. According to this modified embodiment, the controller 71 can adjust the position of the vehicle body based only on the detection result of the lean angle acquiring unit 87, and thus the rocking angle acquiring units 89R and 89L can be omitted.
(2) In Embodiment 2 described above, the controller 71 performs controls so that the lean angle of the vehicle body to the direction of gravitational force become zero, but this is not limitative. That is, the position of the vehicle body may be adjusted so that the lean angle of the vehicle body to the direction of gravitational force become a predetermined angle other than zero. Or the position of the vehicle body may be adjusted so that the lean angle of the vehicle body to the direction of gravitational force become within a predetermined range. Or the position of the vehicle body may be adjusted so that the lean angle of the vehicle body to the direction of gravitational force become small.
(3) In Embodiment 2 described above, the controller 71 adjusts the position of the vehicle body so that the lean angle of the vehicle body to the direction of gravitational force become zero, but this is not limitative. For example, adjustment may be made so that the lean angle of the vehicle body to the traveling surface G become a predetermined angle or within a predetermined range. Or the position of the vehicle body may be adjusted so that the lean angle of the vehicle body to the traveling surface G become small. For example, the position of the vehicle body may be adjusted so that the lean angle of the vehicle body to the traveling surface G become zero. In this case, the vehicle body may be made upright relative to the traveling surface G. According to such modification, the controller 71 can adjust the position of the vehicle body based only on the detection results of the rocking angle acquiring units 89R and 89L, and thus the lean angle acquiring unit 87 can be omitted.
   When adjusting the lean angle of the vehicle body to the traveling surface G, target amounts of rotation may be calculated based on the detection results of the rocking angle acquiring units 89R and 89L, and drive control of the respective electric motors 33R and 33L may be carried out based on the target amounts of rotation. Or the position of the vehicle body may be adjusted, while monitoring the detection results of the rocking angle acquiring units 89R and 89L, by rotating the rear wheel 35 present in the direction in which the vehicle body leans relative to the traveling surface G, and/or the rear wheel 35 present opposite to the direction in which the vehicle body leans relative to the traveling surface G.
(4) In Embodiments 1 and 2 described above, the support mechanism 65 includes the seesaw member 43 which moves the right rear wheel 35R and left rear wheel 35L up and down in opposite directions to each other, but this is not limitative. That is, a change may be made to omit the seesaw member 43 and the right rear arm 31R and the left rear arm 31L may be arranged rockable independently of each other.
(5) Embodiments 1 and 2 described above illustrate, by way of example, a three-wheeled vehicle having a single front wheel 18 and a pair of rear wheels 35R and 35L, but this is not limitative. A change may be made to a four-wheeled vehicle having a pair of front wheels and a pair of rear wheels. In this case, the pair of front wheels correspond to the non-drive wheel in this invention.
(6) In Embodiments 1 and 2 described above, the pair of rear wheels 35R and 35L are drive wheels and the front wheel 18 a non-drive wheel, but this is not limitative. For example, the front wheel may be changed to a drive wheel, and the rear wheels to non-drive wheels. In this case, the front wheel acting as a drive wheel consists of a pair of wheels. The rear wheels acting as non-drive wheels may consist of a single wheel, or may consist of a pair of wheels.
(7) Each or the embodiments described above and each of the modified embodiments described in paragraphs (1) to (6) above may be further changed as appropriate by replacing or combining the components thereof with the components of the other modified embodiments.

### Reference Signs List

- 1: electric vehicle
- 3: body frame
- 5: head tube
- 13: handlebar
- 14: accelerator grip
- 16: rear brake grip
- 18: front wheel (non-drive wheel)
- 25: battery
- 31R: right rear arm (right support mechanism)
- 31L: left rear arm (left support mechanism)
- 33, 33R, 33L: electric motors (motors)
- 35R: right rear wheel (drive wheel)
- 35L: left rear wheel (drive wheel)
- 41: lever
- 43: seesaw member
- 45R, 45L: rods
- 51: bracket
- 53: rod
- 61: buffer
- 65: support mechanism
- 71: controller
- 73R: right drive circuit
- 73L: left drive circuit
- 75: stop checking unit
- 77: operation determining unit
- 79: amount of rotation calculating unit
- 81: front wheel speed acquiring unit
- 83: accelerator control amount acquiring unit
- 85: rear brake operation acquiring unit
- 87: lean angle acquiring unit
- 89R: right rocking angle acquiring unit (rocking angle acquiring unit)
- 89L: left rocking angle acquiring unit (rocking angle acquiring unit)
- A1: rocking central axis
- B: axis of rotation
- G: traveling surface
- g: direction of gravitational force

## Claims

1. An electric vehicle (1) capable of making a turn while leaning a vehicle body (3), comprising:
a non-drive wheel (18) rotatable with steering operation;
a pair of right and left drive wheels (35R, 35L) provided separately from the non-drive wheel (18);
a support mechanism (65) rockably supported by the vehicle body (3) and configured to support the pair of drive wheels (35R, 35L) such that they are vertically movable; and
a pair of motors (33R, 33L) corresponding to the pair of drive wheels (35R, 35L), respectively;
the support mechanism (65) includes:
a right support mechanism (31R) rockably supported by the vehicle body (3) and configured to support the right drive wheel (35R) such that it is vertically movable; and a left support mechanism (31L) rockably supported by the vehicle body (3) and configured to support the left drive wheel (35L) such that it is vertically movable;
**characterized in that**
the electric vehicle (1) comprises a controller (71) configured to adjust a lean angle of the vehicle body (3) by controlling the motors (33R, 33L) to rotate only one of the drive wheels (35R, 35L) or both drive wheels (35R, 35L) in opposite directions, when the vehicle (1) stands still.

2. The electric vehicle (1) according to claim 1, wherein the lean angle of the vehicle body (3) is one of a lean angle of the vehicle body (3) to a direction of gravitational force and a lean angle of the vehicle body (3) to a traveling surface.

3. The electric vehicle (1) according to claim 1 or 2, wherein the controller (71), by controlling the motors (33R, 33L) when the vehicle stands still, is configured to reduce a lean angle of the vehicle body (3) to a direction of gravitational force.

4. The electric vehicle (1) according to any one of claims 1 to 3, wherein when the vehicle stands still, the controller (71) is configured to rotate reversely one of the drive wheels (35R, 35L) present in a direction in which the vehicle body (3) leans relative to a direction of gravitational force.

5. The electric vehicle (1) according to any one of claims 1 to 4, wherein when the vehicle stands still the controller (71) is configured to rotate forward one of the drive wheels (35R, 35L) present in a direction opposite to the direction in which the vehicle body (3) leans relative to a direction of gravitational force.

6. The electric vehicle (1) according to any one of claims 1 to 3, wherein when the vehicle stands still, the controller (71) is configured to rotate reversely one of the drive wheels (35R, 35L) present in a direction in which the vehicle body (3) leans relative to a direction of gravitational force, and is configured to rotate the other drive wheel (35R, 35L) forward.

7. The electric vehicle (1) according to any one of claims 1 to 6, comprising a lean angle acquiring unit (87) configured to acquire a lean angle of the vehicle body (3) to a direction of gravitational force;
wherein when the vehicle stands still, the controller (71) is configured to control the motors (33R, 33L) based on a result of the lean angle acquiring unit (87).

8. The electric vehicle (1) according to claim 7, comprising a rocking angle acquiring unit (89R, 89L) configured to acquire a rocking angle of the support mechanism (65); wherein when the vehicle stands still, the controller (71) is configured to control the motors (33R, 33L) based on each result of the lean angle acquiring unit (87) and the rocking angle acquiring unit (89R, 89L).

9. The electric vehicle (1) according to claim 8, wherein when the vehicle stands still, the controller (71) is configured to calculate a target amount of rotation of each drive wheel (35R, 35L) based on each result of the lean angle acquiring unit (87) and the rocking angle acquiring unit (89R, 89L), and is configured to control the motors (33R, 33L) so that an amount of rotation of each drive wheel (35R, 35L) become the target amount of rotation.

10. The electric vehicle (1) according to any one of claims 1 to 6, comprising a rocking angle acquiring unit (89R, 89L) configured to acquire each rocking angle of the support mechanism (65);
wherein when the vehicle stands still, the controller (71) is configured to control the motors based on a result of the rocking angle acquiring unit (89R, 89L).

11. The electric vehicle (1) according to any one of claims 8 to 10, wherein
the rocking angle acquiring unit (89R, 89L) is configured to acquire each rocking angle of the right support mechanism (31R) and the left support mechanism (31L).

12. The electric vehicle (1) according to any one of claims 1 to 11, comprising an accelerator control amount acquiring unit (83) configured to acquire an accelerator control amount; wherein the controller (71), based on a result of the accelerator control amount acquiring unit (83), is configured to determine that the vehicle (1) stands still when the accelerator control amount is at most a predetermined amount.

13. The electric vehicle (1) according to any one of claims 1 to 12, comprising a non-drive wheel speed acquiring unit (81) configured to acquire a wheel speed of the non-drive wheel (18);
wherein the controller (71), based on a result of the non-drive wheel speed acquiring unit (81), is configured to determine that the vehicle (1) stands still when the wheel speed of the non-drive wheel (18) is zero.

14. The electric vehicle (1) according to any one of claims 1 to 13, comprising a brake operation acquiring unit (85) configured to acquire a brake operation on the drive wheels (35R, 35L);
wherein the controller (71) is configured to make no adjustment of a position of the vehicle body (3) when, based on a result of the brake operation acquiring unit (85), the controller (71) has determined that a brake operation has been carried out.

15. The electric vehicle (1) according to any one of claims 1 to 14, wherein the support mechanism (65) includes a seesaw member (43) is configured to vertically move the pair of drive wheels (35R, 35L) in opposite directions to each other.

## Patentansprüche

1. Elektrofahrzeug (1), das eine Kurve fahren kann, während eine Karosserie (3) geneigt wird, umfassend:
ein nicht-Antriebsrad (18), das bei einer Lenkoperation gedreht werden kann,
ein paar von rechten und linken Antriebsrädern (35R, 35L), die separat zu dem nicht-Antriebsrad (18) vorgesehen sind,
einen Haltemechanismus (65), der schwenkbar durch die Karosserie (3) gehalten wird und konfiguriert ist zum derartigen Halten des Paars von Antriebsrädern (35R, 35L), dass diese vertikal bewegt werden können, und
ein Paar von Motoren (33R, 33L) jeweils in Entsprechung zu dem Paar von Antriebsrädern (35R, 35L),
wobei der Haltemechanismus (65) umfasst:
einen rechten Haltemechanismus (31R), der schwenkbar durch die Karosserie (3) gehalten wird und konfiguriert ist zum derartigen Halten des rechten Antriebsrads (35R), dass dieses vertikal bewegt werden kann, und
einen linken Haltemechanismus (31L), der schwenkbar durch die Karosserie (3) gehalten wird und konfiguriert ist zum derartigen Halten des linken Antriebsrads (35L), dass dieses vertikal bewegt werden kann,
**dadurch gekennzeichnet, dass**
das Elektrofahrzeug (1) eine Steuereinrichtung (71) umfasst, die konfiguriert ist zum Einstellen des Neigungswinkels der Karosserie (3) durch das Steuern der Motoren (33R, 33L) für eine Drehung nur eines der Antriebsräder (35R, 35L) oder beider Antriebsräder (35R, 35L) in zueinander entgegengesetzten Richtungen, wenn das Fahrzeug (1) stillsteht.

2. Elektrofahrzeug (1) nach Anspruch 1, wobei der Neigungswinkel der Karosserie (3) ein Neigungswinkel der Karosserie (3) zu der Schwerkraftrichtung oder ein Neigungswinkel der Karosserie (3) zu der Straßenoberfläche ist.

3. Elektrofahrzeug (1) nach Anspruch 1 oder 2, wobei die Steuereinrichtung (71) durch das Steuern der Motoren (33R, 33L), wenn das Fahrzeug stillsteht, konfiguriert ist zum Reduzieren des Neigungswinkels der Karosserie (3) zu der Schwerkraftrichtung.

4. Elektrofahrzeug (1) nach einem der Ansprüche 1 bis 3, wobei, wenn das Fahrzeug stillsteht, die Steuereinrichtung (71) konfiguriert ist zum Rückwärtsdrehen eines der Antriebsräder (35R, 35L), das in der Neigungsrichtung der Karosserie (3) vorgesehen ist, relativ zu der Schwerkraftrichtung.

5. Elektrofahrzeug (1) nach einem der Ansprüche 1 bis 4, wobei, wenn das Fahrzeug stillsteht, die Steuereinrichtung (71) konfiguriert ist zum Vorwärtsdrehen eines der Antriebsräder (35R, 35L), das in der zu der Neigungsrichtung der Karosserie (3) entgegengesetzten Richtung vorgesehen ist, relativ zu der Schwerkraftrichtung.

6. Elektrofahrzeug (1) nach einem der Ansprüche 1 bis 3, wobei, wenn das Fahrzeug stillsteht, die Steuereinrichtung (71) konfiguriert ist zum Rückwärtsdrehen eines der Antriebsräder (35R, 35L), das in der Neigungsrichtung der Karosserie (3) vorgesehen ist, relativ zu der Schwerkraftrichtung und weiterhin konfiguriert ist zum Vorwärtsdrehen des anderen Antriebsrads (35R, 35L).

7. Elektrofahrzeug (1) nach einem der Ansprüche 1 bis 6, das eine Neigungswinkel-Erfassungseinheit (87) umfasst, die konfiguriert ist zum Erfassen des Neigungswinkels der Karosserie (3) zu der Schwerkraftrichtung,
wobei, wenn das Fahrzeug stillsteht, die Steuereinrichtung (71) konfiguriert ist zum Steuern der Motoren (33R, 33L) basierend auf dem Ergebnis der Neigungswinkel-Erfassungseinheit (87).

8. Elektrofahrzeug (1) nach Anspruch 7, das eine Schwenkwinkel-Erfassungseinheit (89R, 89L) umfasst, die konfiguriert ist zum Erfassen eines Schwenkwinkels des Haltemechanismus (65),
wobei, wenn das Fahrzeug stillsteht, die Steuereinrichtung (71) konfiguriert ist zum Steuern der Motoren (33R, 33L) basierend auf den Ergebnissen der Neigungswinkel-Erfassungseinheit (87) und der Schwenkwinkel-Erfassungseinheit (89R, 89L).

9. Elektrofahrzeug (1) nach Anspruch 8, wobei, wenn das Fahrzeug stillsteht, die Steuereinrichtung (71) konfiguriert ist zum Berechnen einer Zieldrehgröße jedes Antriebsrads (35R, 35L) basierend jeweils auf den Ergebnissen der Neigungswinkel-Erfassungseinheit (87) und der Schwenkwinkel-Erfassungseinheit (89R, 89L) und weiterhin konfiguriert ist zum derartigen Steuern der Motoren (33R, 33L), dass die Drehgröße jedes Antriebsrads (35R, 35L) gleich der Zieldrehgröße wird.

10. Elektrofahrzeug (1) nach einem der Ansprüche 1 bis 6, das eine Schwenkwinkel-Erfassungseinheit (89R, 89L) umfasst, die konfiguriert ist zum Erfassen der Schwenkwinkel des Haltemechanismus (65),
wobei, wenn das Fahrzeug stillsteht, die Steuereinrichtung (71) konfiguriert ist zum Steuern der Motoren basierend auf dem Ergebnis der Schwenkwinkel-Erfassungseinheit (89R, 89L).

11. Elektrofahrzeug (1) nach einem der Ansprüche 8 bis 10, wobei die Schwenkwinkel-Erfassungseinheit (89R, 89L) konfiguriert ist zum Erfassen der Schwenkwinkel des rechten Haltemechanismus (31R) und des linken Haltemechanismus (31L).

12. Elektrofahrzeug (1) nach einem der Ansprüche 1 bis 11, das eine Gaspedalsteuergrößen-Erfassungseinheit (83) umfasst, die konfiguriert ist zum Erfassen einer Gaspedalsteuergröße,
wobei die Steuereinrichtung (71) basierend auf dem Ergebnis der Gaspedalsteuergrößen-Erfassungseinheit (83) konfiguriert ist zum Bestimmen, dass das Fahrzeug (1) stillsteht, wenn die Gaspedalsteuergröße höchstens eine vorbestimmte Größe aufweist.

13. Elektrofahrzeug (1) nach einem der Ansprüche 1 bis 12, das eine Nicht-Antriebsrad-Geschwindigkeit-Erfassungseinheit (81) umfasst, die konfiguriert ist zum Erfassen einer Radgeschwindigkeit des nicht-Antriebsrads (18),
wobei die Steuereinrichtung (71) konfiguriert ist zum Bestimmen, basierend auf dem Ergebnis der Nicht-Antriebsrad-Geschwindigkeit-Erfassungseinheit (81), dass das Fahrzeug (1) stillsteht, wenn die Radgeschwindigkeit des nicht-Antriebsrads (18) gleich null ist.

14. Elektrofahrzeug (1) nach einem der Ansprüche 1 bis 13, das eine Bremsbetätigung-Erfassungseinheit (85) umfasst, die konfiguriert ist zum Erfassen einer Bremsbetätigung an den Antriebsrädern (35R, 35L),
wobei die Steuereinrichtung (71) konfiguriert ist zum Vornehmen keiner Einstellung an der Position der Karosserie (3), wenn die Steuereinrichtung (71) basierend auf dem Ergebnis der Bremsbetätigungs-Erfassungseinheit (85) bestimmt hat, dass eine Bremsbetätigung durchgeführt wurde.

15. Elektrofahrzeug (1) nach einem der Ansprüche 1 bis 14, wobei der Haltemechanismus (65) ein Wippglied (43) umfasst, das konfiguriert ist zum vertikalen Bewegen des Paars von Antriebsrädern (35R, 35L) in zueinander entgegengesetzten Richtungen.

## Revendications

1. Véhicule électrique (1) capable de faire un tour tout en inclinant une carrosserie de véhicule (3), comprenant :
une roue non-motrice (18) pouvant tourner à l'aide d'une opération de pilotage ;
une paire de roues motrices droite et gauche (35R, 35L) agencées séparément de la roue non-motrice (18) ;
un mécanisme de support (65) supporté de manière basculante par la carrosserie de véhicule (3) et configuré pour supporter la paire de roues motrices (35R, 35L) de telle sorte qu'elles puissent se déplacer verticalement ; et
une paire de moteurs (33R, 33L) correspondant à la paire de roues motrices (35R, 35L), respectivement ;
le mécanisme de support (65) comprend :
un mécanisme de support droit (31R) supporté de manière basculante par la carrosserie de véhicule (3) et configuré pour supporter la roue motrice droite (35R) de telle sorte qu'elle puisse se déplacer verticalement ; et un mécanisme de support gauche (31L) supporté de manière basculante par la carrosserie de véhicule (3) et configuré pour supporter la roue motrice gauche (35L) de telle sorte qu'elle puisse se déplacer verticalement ;
**caractérisé en ce que**
le véhicule électrique (1) comprend un dispositif de commande (71) configuré pour ajuster un angle d'inclinaison de la carrosserie de véhicule (3) en commandant les moteurs (33R, 33L) pour faire tourner une seule des roues motrices (35R, 35L) ou les deux roues motrices (35R, 35L) dans des directions opposées, lorsque le véhicule (1) est immobile.

2. Véhicule électrique (1) selon la revendication 1, dans lequel l'angle d'inclinaison de la carrosserie de véhicule (3) est l'un parmi un angle d'inclinaison de la carrosserie de véhicule (3) par rapport à une direction de force gravitationnelle et un angle d'inclinaison de la carrosserie de véhicule (3) par rapport à une surface de déplacement.

3. Véhicule électrique (1) selon la revendication 1 ou 2, dans lequel le dispositif de commande (71), en commandant les moteurs (33R, 33L) lorsque le véhicule est immobile, est configuré pour réduire un angle d'inclinaison de la carrosserie de véhicule (3) dans une direction de force gravitationnelle.

4. Véhicule électrique (1) selon l'une quelconque des revendications 1 à 3, dans lequel, lorsque le véhicule est immobile, le dispositif de commande (71) est configuré pour faire tourner en sens inverse l'une des roues motrices (35R, 35L) présente dans une direction dans laquelle la carrosserie de véhicule (3) s'incline par rapport à une direction de force gravitationnelle.

5. Véhicule électrique (1) selon l'une quelconque des revendications 1 à 4, dans lequel, lorsque le véhicule est immobile, le dispositif de commande (71) est configuré pour faire tourner vers l'avant l'une des roues motrices (35R, 35L) présente dans une direction opposée à la direction dans laquelle la carrosserie de véhicule (3) s'incline par rapport à une direction de force gravitationnelle.

6. Véhicule électrique (1) selon l'une quelconque des revendications 1 à 3, dans lequel, lorsque le véhicule est immobile, le dispositif de commande (71) est configuré pour faire tourner en sens inverse l'une des roues motrices (35R, 35L) présente dans une direction dans laquelle la carrosserie de véhicule (3) s'incline par rapport à une direction de force gravitationnelle, et est configuré pour faire tourner l'autre roue motrice (35R, 35L) vers l'avant.

7. Véhicule électrique (1) selon l'une quelconque des revendications 1 à 6, comprenant une unité d'acquisition d'angle d'inclinaison (87) configurée pour acquérir un angle d'inclinaison de la carrosserie de véhicule (3) dans une direction de force gravitationnelle ;
dans lequel, lorsque le véhicule est immobile, le dispositif de commande (71) est configuré pour commander les moteurs (33R, 33L) sur la base d'un résultat de l'unité d'acquisition d'angle d'inclinaison (87).

8. Véhicule électrique (1) selon la revendication 7, comprenant une unité d'acquisition d'angle de basculement (89R, 89L) configurée pour acquérir un angle de basculement du mécanisme de support (65) ; dans lequel, lorsque le véhicule est immobile, le dispositif de commande (71) est configuré pour commander les moteurs (33R, 33L) sur la base de chaque résultat de l'unité d'acquisition d'angle d'inclinaison (87) et de l'unité d'acquisition d'angle de basculement (89R, 89L).

9. Véhicule électrique (1) selon la revendication 8, dans lequel, lorsque le véhicule est immobile, le dispositif de commande (71) est configuré pour calculer une quantité cible de rotation de chaque roue motrice (35R, 35L) sur la base de chaque résultat de l'unité d'acquisition d'angle d'inclinaison (87) et de l'unité d'acquisition d'angle de basculement (89R, 89L), et est configuré pour commander les moteurs (33R, 33L) de sorte qu'une quantité de rotation de chaque roue motrice (35R, 35L) devient la quantité cible de rotation.

10. Véhicule électrique (1) selon l'une quelconque des revendications 1 à 6, comprenant une unité d'acquisition d'angle de basculement (89R, 89L) configurée pour acquérir chaque angle de basculement du mécanisme de support (65) ;
dans lequel, lorsque le véhicule est immobile, le dispositif de commande (71) est configuré pour commander les moteurs sur la base d'un résultat de l'unité d'acquisition d'angle de basculement (89R, 89L).

11. Véhicule électrique (1) selon l'une quelconque des revendications 8 à 10, dans lequel l'unité d'acquisition d'angle d'inclinaison (89R, 89L) est configurée pour acquérir chaque angle de basculement du mécanisme de support droit (31R) et du mécanisme de support gauche (31L).

12. Véhicule électrique (1) selon l'une quelconque des revendications 1 à 11, comprenant une unité d'acquisition de quantité de commande d'accélérateur (83) configurée pour acquérir une quantité de commande d'accélérateur ; dans lequel le dispositif de commande (71), sur la base d'un résultat de l'unité d'acquisition de quantité de commande d'accélérateur (83), est configuré pour déterminer que le véhicule (1) est immobile lorsque la quantité de commande d'accélérateur est au plus égale à une quantité prédéterminée.

13. Véhicule électrique (1) selon l'une quelconque des revendications 1 à 12, comprenant une unité d'acquisition de vitesse de roue non-motrice (81) configurée pour acquérir une vitesse de roue de la roue non-motrice (18) ;
dans lequel le dispositif de commande (71), sur la base d'un résultat de l'unité d'acquisition de vitesse de roue non-motrice (81), est configuré pour déterminer que le véhicule (1) est immobile lorsque la vitesse de roue de la roue non-motrice (18) est égale à zéro.

14. Véhicule électrique (1) selon l'une quelconque des revendications 1 à 13, comprenant une unité d'acquisition d'opération de freinage (85) configurée pour acquérir une opération de freinage sur les roues motrices (35R, 35L) ;
dans lequel le dispositif de commande (71) est configuré pour ne réaliser aucun ajustement d'une position de la carrosserie de véhicule (3) lorsque, sur la base d'un résultat de l'unité d'acquisition d'opération de freinage (85), le dispositif de commande (71) a déterminé qu'une opération de freinage a été réalisée.

15. Véhicule électrique (1) selon l'une quelconque des revendications 1 à 14, dans lequel le mécanisme de support (65) comprend un élément de balancier (43) configuré pour déplacer verticalement la paire de roues motrices (35R, 35L) dans des directions opposées l'une à l'autre.
